# EUROPEAN PATENT SPECIFICATION

(11) **EP 1 763 267 B1**
(45) Date of publication and mention of the grant of the patent: **28.10.2009**
(21) Application number: 06380226.8
(22) Date of filing: 08.08.2006
(51) Int. Cl.: H04W 12/00, H04Q 3/00

(54) **Method of marking/labelling a call/session in telecommunications networks**
Verfahren zur Markierung/Etikettierung von einem Anruf/einer Sitzung in Telekommunikationsnetzen
Procédé de marquage/étiquetage d'un appel/ d'une session dans des réseaux de télécommunications

(30) Priority: 08.09.2005 ES 200502187
(43) Date of publication of application: 14.03.2007
(73) Proprietor: Vodafone Group PLC, Newbury Berkshire RG14 2FN (GB); Vodafone Espana, S.A., 28108 Alcobendas, Madrid (ES)
(72) Inventor: Cajigas Bringas, Guillermo, 28030 Madrid (ES); Lopez Colmenarejo, Juan Francisco, 28027 Madrid (ES); Ocon Cardenas, Sergio Fernando, 28050 Madrid (ES)
(74) Representative: Keston, David Arthur

(56) References cited:
- EP-A- 0 827 356
- EP-B1- 0 963 095
- WO-A-98/25426
- DE-A1- 19 941 552

## Description

### Field of the Invention

The present invention is encompassed within the field of communications, and more specifically in a safe two-step system of marking/labelling calls or sessions.

### Background of the Invention

When one call is to be differentiated from another call under similar conditions for any reason in a land or mobile telephony network, the marking or labelling of the call in some of its parameters is used. For example, this labelling is carried out in the event of wanting to distinguish calls from one subscriber made under different circumstances (from different places) or for calls coming from a specific subscriber to be processed in a special way (different rates, automatic forwarding, etc.).

In these cases; it is usual to mark or label the call with a numerical mark that the network detects, acting accordingly.

The marks usually incorporating those calls having a special processing do not change on a frequent basis (a frequency of months, or even years).

This circumstance presents problems in security and may lead to fraud: if a malicious subscriber acquires knowledge of the modified marks/parameters with which a call is marked that is beneficial to him or her (for example, because it corresponds to a reduced rate), he or she may reproduce said marks in circumstances that are not authorized by the operator so as to benefit from applying processing that is not authorized for that customer (different rates).

Document DE19941552 discloses a method for selecting (the user) a tariff for use of communications network, in which the user requesting a connection inputs a predetermined identification code, and the input code is transmitted to the exchange which generates a communication data set. If the identification code is detected by the exchange, information associated with the code is entered in the communication data set of a desired communications connection.

It is known that abbreviations and acronyms are frequently used in the field of mobile telephony. Below there is a list of terms and acronyms used throughout this specification:
- IN: Intelligent network
- MSC: Mobile Switching Centre
- MSISDN: Mobile Station International ISDN Number
- SCP: Service Control Point
- SDP: Service Data Point

### Description of the Invention

The invention relates to a method of marking/labelling a call/session made by a mobile equipment in a telecommunications network according to claim 1. Preferred embodiments of the method are defined in the dependent claims.

The present invention provides a method which, unlike those methods known in the state of the art, provides the network with the ability to check that a subscriber is securely setting up a call with certain special characteristics by means of marking or labelling a call in two steps, with two different marks or labels, one in each step.

According to one aspect of the invention, it relates to a method of marking/labelling a call/session made by a mobile equipment in a telecommunications network, said call/session including call/session set up parameters, and the method comprises:
- generating a first mark variable over time in the mobile equipment,
- including said first variable mark in at least one of said call/session set up parameters,
- verifying in said telecommunications network that said first variable mark is valid,
- generating in said telecommunications network a second mark fixed over time substituting said variable mark so as to identify a call/session belonging to a group of predetermined calls/sessions. Said call/session is preferably a call from a mobile terminal in the mobile telephony network.

Said first variable mark can be generated in the mobile terminal, or it can be generated in an apparatus close to the mobile terminal and communicating with said mobile terminal.

Said first variable mark can be random, being possible to generate a random number using as a seed: a secret code, the MSISDN of the subscriber of the mobile terminal and a date.

The invention therefore provides a method for two-step dynamic labelling, using two marks or labels: one is variable and having restricted temporary validity and the other one is unchanging and permanent.

### Brief Description of the Drawings

A drawing which aids in better understanding the invention and which is expressly related to an embodiment of said invention, presented as a non-limiting example thereof, is described below.

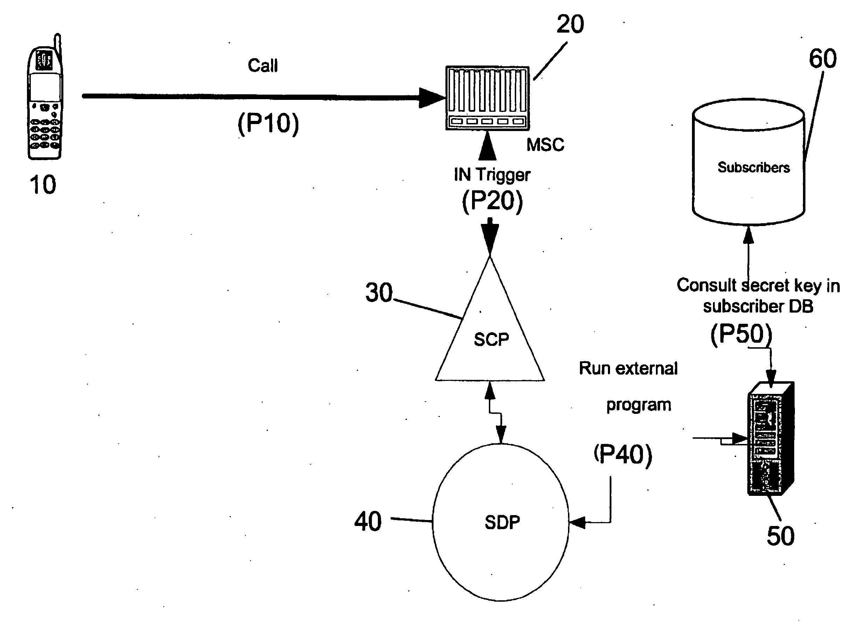

Figure 1 shows how the processing of a call from a mobile terminal in the network is carried out according to the two-step labelling process of the invention.

### Description of a Preferred Embodiment of the Invention

According to a preferred embodiment of the invention, a call is marked or labelled by a subscriber in a telecommunications network in two steps using two different marks or labels, one mark or label in each phase. One of the labels, the first one, has a fixed part plus a variable part with restricted temporary validity - in the range of seconds. The second label is fixed over time, facilitating the management of the type of calls incorporating this type of labels by the mobile operator.

The first label can be generated in the subscriber's terminal or in an external system close to the subscriber it is communicating with. As indicated, this first label in turn has two parts: a fixed part and a variable part having restricted temporary validity. This first label must be included in one of the call set up parameters. If this parameter is the calling number, the label must be made up of only numerical characters.

A known method is used to generate the variable part: a pseudorandom number generator is used in the mobile terminal 10 (see Figure 1) or in an apparatus close to the mobile and communicating with it. When the mobile terminal is going to make a call (P10), the generator in the mobile terminal (or in the apparatus close to it) is asked to generate a random number using as a seed: a secret code already in the mobile terminal (and which can be, for example, the PIN or other secret number stored in the mobile terminal), the MSISDN of the subscriber and a date, expressed as year, day, hour, minute and second, the seconds being 0 to 30. This random number (variable part) together with a fixed part constitute a first variable label included among the call parameters; the fixed part is generated by the logic of the application carrying out the marking.

As shown in Figure 1, when the call reaches the mobile switching centre MSC 20, the authentication is checked using this parameter. For example, the MSC 20 generates an intelligent network IN trigger (P20) based on the fixed part of the first label. The IN trigger reaches the service control point SCP 30 which in turn takes it to the SDP node 40, which runs a program (P40) in a random number generator 50 that is in the mobile operator network.

Said program does the following: with the subscriber's secret number, consulting the subscriber data base 60 (P50), the MSISDN and the current date (year, day, hour, minute and second) generates an intermediate label. In this case, the seconds must be between 0 and 30, and the machine uses 0 if the seconds are less than or equal to 30, or 30 if they are greater than 30. If both the first and intermediate labels coincide, the parameter is substituted with a second fixed label created in the mobile operator network and, therefore, a secure label.

The call is returned to triggering the MSC but this label is substituted with another.

If the first and intermediate labels generated do not coincide, the label is simply erased and the call is returned to the MSC to progress as usual.

## Claims

1. A method of marking a call made by a mobile terminal (10) in a telecommunications network, said call including call establishment parameters, the method comprising:
- generating a first mark variable over time in the mobile terminal,
- including said first variable mark in at least one of said call set up parameters,
- verifying in said telecommunications network that said first variable mark is valid,
**characterized in that** the method further comprises:
- when said first variable mark is valid generating in said telecommunications network a second mark fixed over time substituting said variable mark so as to identify a call belonging to a group of predetermined calls.

2. A method according to claim 1, **characterized in that** said call is a call (P10) from a mobile terminal (10) in a mobile telephony network.

3. A method according to claim 2, **characterized in that** said first variable mark is generated in an apparatus that is close to the mobile terminal (10) and communicating with said mobile terminal (10).

4. A method according to any of the previous claims, **characterized in that** said first variable mark is random.

5. A method according to any of claims 1-4, **characterized in that** said first variable mark is a random number generated using as a seed: a secret code, the MSISDN of the subscriber of the mobile terminal (10) and a date.

## Patentansprüche

1. Verfahren zum Markieren eines Anrufs, der mit einem mobilen Endgerät (10) in einem Telekommunikationsnetzwerk gemacht wird, wobei der genannte Anruf Anrufaufbauparameter enthält, wobei das Verfahren die folgenden Schritte beinhaltet:
- Erzeugen einer ersten Markierung, die in dem mobilen Endgerät über den Zeitablauf variabel ist,
- Einbeziehen der genannten ersten variablen Markierung in wenigstens einen der genannten Anrufeinrichtungsparameter,
- Überprüfen in dem genannten Telekommunikationsnetzwerk, ob die genannte erste variable Markierung gültig ist,
**dadurch gekennzeichnet, dass** das Verfahren ferner den folgenden Schritt beinhaltet:
- wenn die genannte erste Variable gültig ist, Erzeugen einer zweiten, über den Zeitablauf festen Markierung in dem genannten Telekommunikationsnetzwerk, die die genannte variable Markierung ersetzt, um einen Anruf zu identifizieren, der zu einer Gruppe von vorbestimmten Anrufen gehört.

2. Verfahren nach Anspruch 1, **dadurch gekennzeichnet, dass** der genannte Anruf ein Anruf (P10) von einem mobilen Endgerät (10) in einem Mobiltelefonie-Netzwerk ist.

3. Verfahren nach Anspruch 2, **dadurch gekennzeichnet, dass** die genannte erste variable Markierung in einer Vorrichtung erzeugt wird, die sich in der Nähe des mobilen Endgerätes (10) befindet und mit dem genannten mobilen Endgerät (10) kommuniziert.

4. Verfahren nach einem der vorherigen Ansprüche, **dadurch gekennzeichnet, dass** die genannte erste variable Markierung zufällig ist.

5. Verfahren nach einem der Ansprüche 1-4, **dadurch gekennzeichnet, dass** die genannte erste variable Markierung eine Zufallszahl ist, die mit einem Geheimcode, der MSISDN des Teilnehmers des mobilen Endgeräts (10) und einem Datum als Seed erzeugt wird.

## Revendications

1. Procédé de marquage d'un appel effectué par un terminal mobile (10) dans un réseau de télécommunications, ledit appel englobant des paramètres d'établissement d'appel, le procédé comprenant :
- l'opération consistant à générer un premier marquage variable dans le temps au niveau du terminal mobile,
- l'opération consistant à inclure ledit premier marquage variable dans l'un au moins desdits paramètres d'établissement d'appel,
- l'opération consistant à vérifier dans ledit réseau de télécommunications que ledit premier marquage variable est valide,
**caractérisé en ce que** le procédé comprend en outre:
- lorsque ledit premier marquage variable est valide, l'opération consistant à générer dans ledit réseau de télécommunications un deuxième marquage fixe dans le temps en remplacement dudit marquage variable de sorte à identifier un appel qui appartient à un groupe d'appels prédéterminé.

2. Procédé selon la revendication 1, **caractérisé en ce que** ledit appel est un appel (P10) provenant d'un terminal mobile (10) dans un réseau de téléphonie mobile.

3. Procédé selon la revendication 2, **caractérisé en ce que** ledit premier marquage variable est généré dans un appareil lequel est situé à proximité du terminal mobile (10) et est en communication avec ledit terminal mobile (10).

4. Procédé selon l'une quelconque des revendications précédentes, **caractérisé en ce que** ledit premier marquage variable est aléatoire.

5. Procédé selon l'une quelconque des revendications 1 à 4, **caractérisé en ce que** ledit premier marquage variable est un chiffre aléatoire qui est généré si on utilise en tant que germe : un code secret, le MSISDN de l'abonné du terminal mobile (10) et une date.
